# EUROPEAN PATENT APPLICATION

(11) **EP 1 855 288 A1**
(43) Date of publication of application: **14.11.2007**
(21) Application number: 05774876.6
(22) Date of filing: 24.08.2005
(51) Int. Cl.: G11B 27/10

(54) **DATA RECORDING/REPRODUCING DEVICE**

(30) Priority: 03.03.2005 JP 2005058327
(71) Applicant: D&M Holdings, Inc., Kanagawa 210-8569 (JP)
(72) Inventor: INABA, Ken c/o D & M HOLDINGS, INC., Sagamihara-shi, Kanagawa 2288505 (JP); ENO, Ryouta c/o D & M HOLDINGS, INC., Sagamihara-shi, Kanagawa 2288505 (JP); NAKATO, Kenichi c/o D & M HOLDINGS, INC., Sagamihara-shi, Kanagawa 2288505 (JP)
(74) Representative: Hackney, Nigel John
(86) International application number: PCT/JP2005/015351
(87) International publication number: WO 2006/092873

(57) **Abstract**

In a data recording/reproducing device, data files recorded on a recording medium are assigned, in an order of newer recording start times, from a small-numbered numeric button (204) of a remote controller (113), and are stored as a button mapping table (115). When an indication that any of the numeric buttons (204) has been pressed is accepted through the remote controller (113), a data file, which is stored in the button mapping table (115) in association with the number of the numeric button accepted, is reproduced.

## Description

### Background of the Invention

The present invention relates to a data recording/reproducing technology of recording video data or audio data on a recording medium such as a hard disk (HD) and reproducing the video data or the audio data recorded on the recording medium.

Recording/reproducing devices using a recording medium such as a hard disk are becoming popular in recent years. The recording/reproducing device is capable of recording broadcast signals, such as television broadcasts, in large quantities and allowing a user to selectively reproduce the broadcast signals recorded in the recording/reproducing device. To reproduce the broadcast signals recorded in the recording/reproducing device, the user first calls up a menu screen, then selects broadcast signals to watch from a list of titles or record files displayed as thumbnails, and gives an instruction to start reproduction, so that the user can watch the desired broadcast signals (see, for example, Japanese Patent Laid-open Publication No. 2003-244652; hereinafter referred to as Patent Document 1).

According to the moving picture reproducing apparatus disclosed in Patent Document 1, in order to watch broadcast signals recorded on a HD, it is necessary to perform an operation to cause a menu screen to be displayed, an operation to select broadcast signals (a record file) to watch from a file list displayed on a screen, and an operation to cause the selected broadcast signals to be reproduced. Accordingly, a user is required to press a button of a remote controller a plurality of times, which increases the number of operations necessary to start reproduction of the desired broadcast signals, and therefore it is difficult for the user to immediately watch the broadcast signals which the user desires to watch.

Further, according to the moving picture reproducing apparatus disclosed in Patent Document 1, the same number of multiple operations is necessary for watching broadcast signals recorded some time before as for watching broadcast signals recorded recently. Accordingly, it is necessary for a user to perform multiple operations to reproduce broadcast signals even if the broadcast signals have been recorded immediately before, which is troublesome.

### Summary of the Invention

The present invention has been made to alleviate the above-mentioned inconveniences, and therefore, it is an object of the invention to provide a data recording/reproducing technology capable of starting reproduction of recorded broadcast signals with a substantially reduced number of operations.

To attain the above-mentioned object, a data recording/reproducing device according to the present invention includes: a recording/reproducing unit which records/reproduces data files on/from a recording medium; a remote controller which is provided with a plurality of numeric buttons each assigned different numbers; a receiving unit which receives an instruction signal from the remote controller when one of the plurality of numeric buttons is pressed, the instruction signal indicating a number assigned to the numeric button pressed; a button mapping table which stores the numbers assigned to the plurality of numeric buttons of the remote controller and the data files recorded on the recording medium by associating the numbers with the data files; and a control unit which executes control over the recording/reproducing unit so that, when the receiving unit has received an instruction signal indicating a number assigned to any one of the plurality of the numeric buttons, the recording/reproducing unit reproduces a data file which is stored in the button mapping table in association with the number indicated by the received instruction signal. According to the present invention, it becomes possible for a user to start reproducing recorded broadcast signals (a data file) easily with a substantially reduced number of operations, without performing an operation such as displaying a menu screen.

### Brief Description of the Drawings

In the accompanying drawings:
FIG. 1 is a diagram showing a schematic configuration of a data recording/reproducing device according to an embodiment of the present invention;
FIG. 2 is a diagram showing a schematic configuration of a remote controller of the data recording/reproducing device according to the embodiment of the present invention;
FIGS. 3A to 3D are diagrams describing a record file table and a button mapping table in the data recording/reproducing device according to the embodiment of the present invention;
FIG. 4 is a flowchart describing a recording operation performed by the data recording/reproducing device according to the embodiment of the present invention; and
FIG. 5 is a flowchart describing a reproduction operation performed by the data recording/reproducing device according to the embodiment of the present invention.

### Description of the Preferred Embodiment

A data recording/reproducing device according to an embodiment as below is described as a device for recording/reproducing a television broadcast program, but the present invention is not limited thereto. The data recording/reproducing device may include a device for reproducing video data or audio data which has been input from a reproduction device connected to the data recording/reproducing device and temporarily stored in a HD.

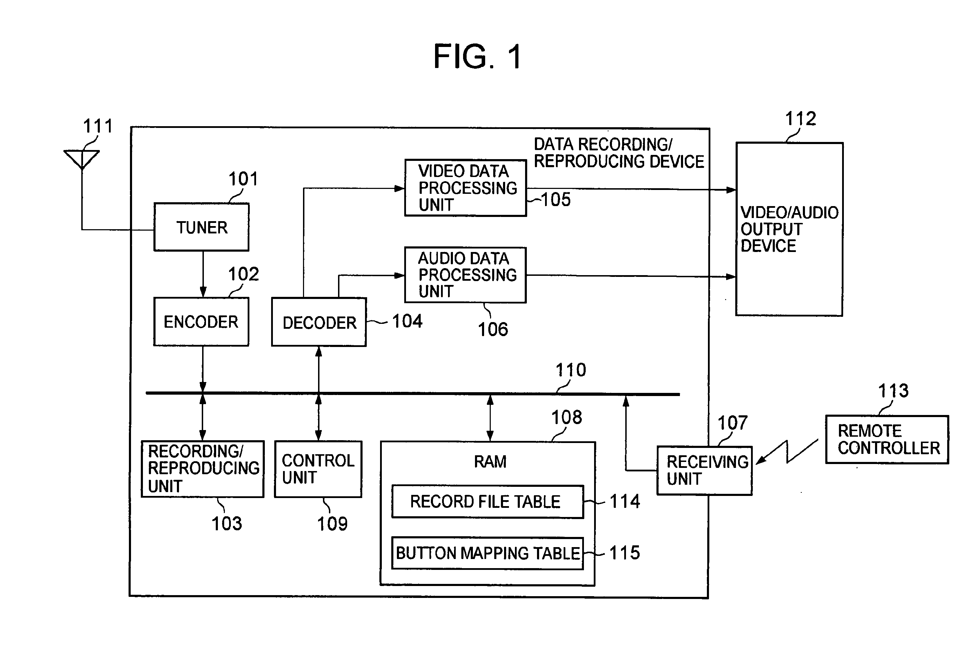

FIG. 1 is a diagram showing a schematic configuration of an embodiment of the data recording/reproducing device according to the present invention.

In FIG. 1, the data recording/reproducing device includes a tuner 101, an encoder 102, a recording/reproducing unit 103, a decoder 104, a video data processing unit 105, an audio data processing unit 106, a receiving unit 107, a random access memory (RAM) 108, and a control unit 109. The encoder 102, the decoder 104, the recording/reproducing unit 103, the receiving unit 107, the RAM 108, and the control unit 109 are each connected to a bus 110 and exchange data through the bus 110.

The tuner 101 includes an antenna 111 for receiving a television broadcast program. Under the control of the control unit 109 described later, the tuner 101 extracts broadcast signals of a designated broadcast channel from radio waves received through the antenna 111 and outputs the broadcast signals to the encoder 102.

The encoder 102 compresses the broadcast signals output from the tuner 101, based on, for example, the MPEG system (Moving Picture Expert Group). Under the control of the control unit 109 described later, the encoder 102 outputs data obtained by compressing the broadcast signals to the recording/reproducing unit 103 through the bus 110.

Under the control of the control unit 109 described later, the recording/reproducing unit 103 records the compressed data output from the encoder 102, on a recordingmedium. In this example, the recording/reproducing unit 103 is formed of a hard disk drive (HDD) and records data in an internal hard disk (HD). The recording/reproducing unit 103 records data obtained from starting recording to stopping the recording as a single record file. Also, under the control of the control unit 109 described later, the recording/reproducing unit 103 reproduces data included in a designated record file. In other words, the recording/reproducing unit 103 reads the data from the recording medium and outputs the data to the decoder 104.

Under the control of the control unit 109 described later, the decoder 104 decompresses the compressed data output from the recording/reproducing unit 103. The decoder 104 selectively outputs the decompressed data by outputting video data to the video data processing unit 105 and audio data to the audio data processing unit 106.

The video data processing unit 105 converts video data into video signals conforming to the display specifications of the video/audio output device 112 (such as a monitor or a projector), and outputs the video signals to the video/audio output device 112. The video/audio output device 112 displays the input video signals as video images.

The audio data processing unit 106 subjects audio data to analog-to-digital conversion, and outputs the converted audio data to the video/audio output device 112 or a speaker (not shown) connected to an amplifier. The video/audio output device 112 or the speaker connected to an amplifier outputs the input audio signal as sounds.

The receiving unit 107 receives and analyzes infrared light transmitted from the remote controller 113. After analyzing the infrared light, the receiving unit 107 outputs command signals corresponding to the plurality of buttons provided on the remote controller 113, to the control unit 109.

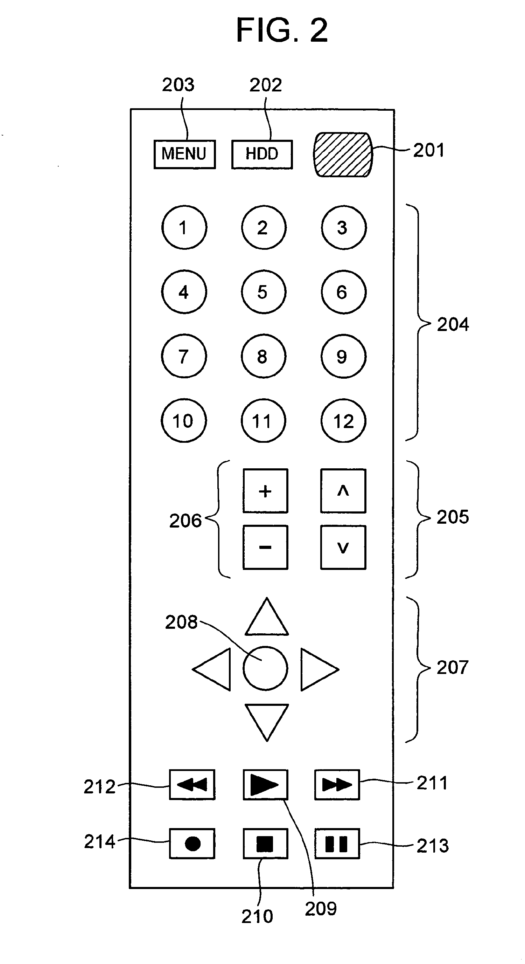

FIG. 2 is a diagram showing a schematic configuration of the remote controller 113 of the data recording/reproducing device according to this embodiment.

In FIG. 2, the remote controller 113 is provided with a "power" button 201, an "HDD" button 202, a "menu" button 203, numeric buttons 204, "1" to "12", volume buttons 205 for giving an instruction to turn up and down the volume, channel buttons 206, "+" and "-", for giving an instruction to increment or decrement a channel number, a selection button 207 for selecting a recorded broadcast program or a broadcast program to reproduce, an enter button 208 for entering the selection, a reproduction button 209, a stop button 210, a fast-forward reproduction button 211, a fast-rewind reproduction button 212, a pause button 213, and a recording button 214. In addition to these buttons, the remote controller 113 may also be provided with a skip button.

The "HDD" button 202 is operated to reproduce data recorded in a HD. The "HDD" button 202 is used to switch between output of a broadcast program received by the tuner 101 and reproduction of data recorded in the HD. Specifically, a user can select/start reproducing data stored in the HD by pressing the "HDD" button 202 when watching a broadcast program in real time.

The RAM 108 includes a record file table 114 and a button mapping table 115. The control unit 109 described later stores data in the tables held by the RAM 108.

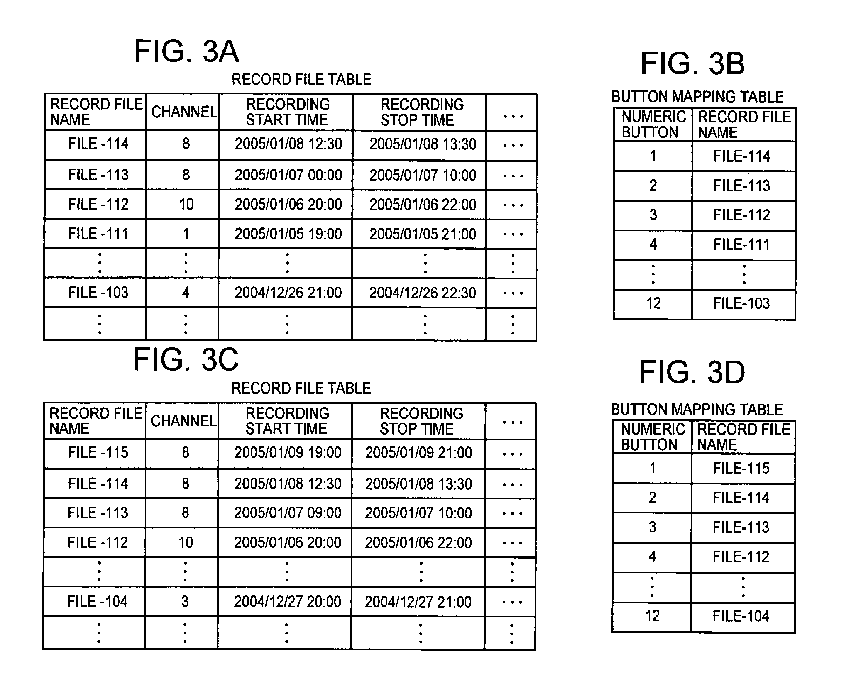

FIGS. 3A to 3D are diagrams describing the record file table 114 and the button mapping table 115 in the data recording/reproducing device according to this embodiment.

The record file table 114 stores information relating to record files recorded in the recording/reproducing unit 103. Specifically, as shown in FIG. 3A, the record file table 114 stores information including a record file name, a channel number, recording start/stop time, and other information with respect to each of the files recorded in the recording/reproducing unit 103.

The record file name indicates information given to the record files in chronological order in which the record files have been recorded in the recording/reproducing unit 103. The information is used to identify each of the record files. The channel number corresponds to a channel number of a broadcast program which has been recorded. The recording start/stop time indicates a recording start time and a recording stop time of the corresponding broadcast program. In addition to the above-mentioned information, the record file table 114 also stores an address for identifying a recording position of the broadcast program in the recording/reproducing unit 103 and other information including a recording mode. The control unit 109 stores the recorded file name, the channel number, and the recording starting time at the time when the recording is started, and stores the recording stop time at the time when the recording is completed..

The button mapping table 115 stores a correspondence between the files stored in the record file table 114 and the buttons of the numeric buttons 204 provided on the remote controller 113. As shown in FIG. 3B, the button mapping table 115 stores information in which the record files stored in the record file table 114 are associated with the numeric buttons 204 of the remote controller 113 so that the numeric button 204 assigned a smaller number corresponds to a record file which has been stored in the record file table 114 more recently.

At this time, in a case where the number of record files stored in the record file table 114 is equal to or smaller than the number of the numeric buttons 204, no record file is assigned to the numeric button 204 which is assigned a number equal to or larger than the number of the record files. For example, when twelve numeric buttons 204 are provided, the maximum number of the record files that can be assigned to the numeric buttons 204 is twelve.

The control unit 109 controls the data recording/reproducing device in a comprehensive manner. Based on an instruction from the remote controller 113, the control unit 109 controls operation of the tuner 101 to select a broadcast channel, operation of the encoder 102 to compress broadcast signals, operation of the decoder 104 to decompress data, data transfer between the constituent elements, and operation of the recording/reproducing unit 103 to record and read out data.

The control unit 109 controls recording/erasing of broadcast signals in the recording/reproducing unit 103, and updates information in the record file table 114 and the button mapping table 115 of the RAM 108. Based on the chronological order in which the broadcast programs have been recorded, the control unit 109 associates the record files with the numeric buttons 204 of the remote controller 113. When any one of the numeric buttons 204 is pressed after a specific manipulation of the remote controller 113, the control unit 109 causes a record file corresponding to the pressed numeric button 204 to be reproduced.

In this embodiment, the "specific manipulation of the remote controller 113" refers to pressing a button (such as the "HDD" button 202, the menu button 203, or the enter button 208) excluding the "power" button 201, the numeric buttons 204, and any other button relating to reproduction of a record file (i.e., the reproduction start button 209, the reproduction stop button 210, the fast-forward button 211, the fast-rewind button 212, the pause button 213, or the recording button 214), before pressing the numeric button 204. The "specific manipulation of the remote controller 113" may also refer to pressing and holding the numeric button 204, or successively pressing the numeric button 204 a plurality of times, after a button such as the "HDD" button 202 is pressed or without the "HDD" button 202 being pressed.

In the case where the above-mentioned specific manipulation has been performed, the control unit 109 causes the recording/reproducing unit 103 to reproduce a record file stored in the button mapping table 115 in association with the pressed numeric button 204. In this embodiment, a case where the numeric button 204 is pressed after the "HDD" button 202 shown in FIG. 2 is pressed is regarded as the specific manipulation, and a description thereof will be given in the following.

A description is given of how the data in the record file table 114 and the data in the button mapping table 115 are updated.

When a new recording operation is performed, the control unit 109 adds information on the new record file in the record file table 114. After that, the control unit 109 assigns the smallest number, "1", to the added new record file, increments a number assigned to the record files in reverse chronological order, and updates the information in the button mapping table 115.

For example, as shown in FIG. 3A, the record file table 114 stores information relating to the record files, "FILE-114", "FILE-113", "FILE-112" ..., in reverse chronological order of the recording times. In this case, as shown in FIG. 3B, the control unit 109 assigns, in the button mapping table 115, the numeric button, "1", to the latest record file "FILE-114", assigns the numericbutton, "2", to the second latest record file "FILE-113", and sequentially increments a number assigned to the record files in chronological order.

In a case where a record file "FILE-115" is additionally stored in the record file table 114 as shown in FIG. 3C, the control unit 109 assigns the new record file "FILE-115" to the numeric button, "1", in the button mapping table 115 as shown in FIG. 3D. Then, the control unit 109 assigns the numeric buttons 204 in ascending order of the numbers starting from "2" to the record files, "FILE-114", "FILE-113" ... "FILE-104", which have been already stored. The control unit 109 deletes the record file "FILE-103", which has been assigned the numeric button, "12", in FIG. 3B, from the button mapping table 115.

As described above, each time a new record file is stored in the record file table 114, the control unit 109 assigns the smallest number, "1", to the newly stored record file, assigns the numbers up to a number corresponding to the number of the numeric buttons 204 in ascending order starting from "2" to the rest of the record files in reverse chronological order of the recording times, and deletes the oldest record file from the button mapping table 115. In the manner described above, the control unit 109 updates the button mapping table 115.

A description is given of an operation to be performed when the numeric button 204 of the remote controller 113 is pressed.

The numbers in the "numeric button" column of the button mapping table 115 correspond to the numeric buttons 204 of the remote controller 113. Upon receiving an indication that one of the numeric buttons 204 has been pressed, the control unit 109 refers to the button mapping table 115 and extracts a file name assigned the same number as the number indicated by the pressed numeric button 204 of the remote controller 113. Then, the control unit 109 obtains information necessary for reproducing a record file having the extracted file name, from the record file table 114. Based on the information thus obtained, the control unit 109 causes the recording/reproducing unit 103 to start reproducing the corresponding record file.

For example, when an indication is received that a button "3" of the numeric buttons 204 of FIG. 2 has been pressed, the control unit 109 refers to the button mapping table 115 shown in FIG. 3B and extracts the record file name "FILE-112" which corresponds to the number "3" in the "numeric button" column. The control unit 109 obtains, with reference to the record file table 114, information including address information of the record file having a file name of "FILE-112", and causes the recording/reproducing unit 103 to reproduce the corresponding record file.

A description is given of a case where a record file is deleted from therecording/reproducing unit 103 in which the record file has been recorded.

In the case where a record file, which has been recorded in the recording/reproducing unit 103, is deleted, the control unit 109 deletes information relating to the deleted record file from the record file table 114. Further, the control unit 109 deletes information relating to the deleted file, from the button mapping table 115.

When deleting the record file from the button mapping table 115, the control unit 109 updates the numbers assigned to the rest of the record files remaining in the button mapping table 115. Specifically, the control unit 109 decrements by one (reduces) each of the numbers assigned to the record files which have been recorded earlier than the deleted record file. If possible, the control unit 109 adds the latest record file of the record files which are stored in the record file table 114 but not associated with the numbers in the button mapping table 115, and assigns the maximum number of the numeric buttons 204 to the latest record file.

For example, in a case of the button mapping table 115 of FIG. 3B, when deleting the record file "FILE-112" to which a button "3" of the numeric buttons 204 has been assigned, the control unit 109 assigns, to the button "3" of the numeric buttons 204, the record file "FILE-111" (record file which has been assigned a button "4" of the numeric buttons 204 until the record file "FILE-112" is deleted) which has a recording time second-latest to that of the record file "FILE-112", and sequentially decrements the numbers which have been assigned to the rest of the record files. If possible, the control unit 109 assigns a maximum number to a record file newly obtained from the record file table 114.

Next, a description is given of an operation of the data recording/reproducing device.

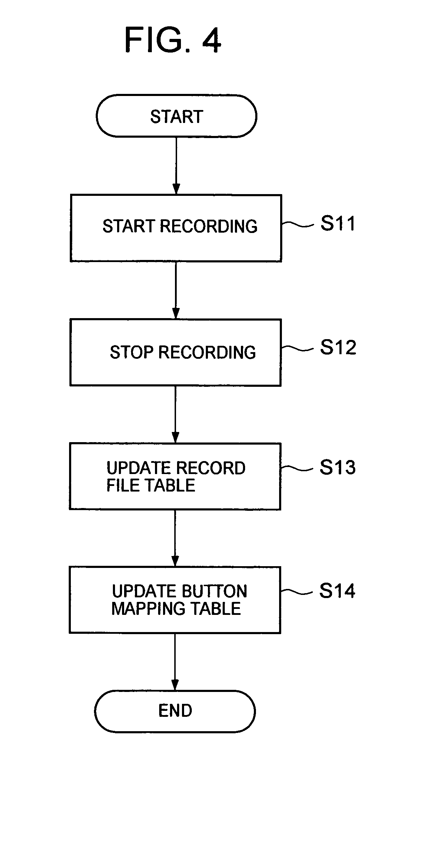

First, an operation for recording is described. FIG. 4 is a flowchart describing the recording operation of the data recording/reproducing device of this embodiment.

In a case where an instruction to start recording is given or settings are made for programmed recording by the remote controller 113, the control unit 109 starts recording a broadcast program based on the instruction to start recording or the setting of programmed recording (Step S11). At this time, the control unit 109 stores information relating to the record file of the broadcast program, recording of which has been started in the record file table 114.

The control unit 109 stops the recording when an instruction to stop recording is received from the remote controller 113 or after the programmed recording time has passed (Step S12).

When stopping the recording, the control unit 109 writes the recording stop time of the record file in the data of the corresponding record file stored in the record file table 114, to thereby update the data in the record file table 114 (Step S13).

After updating the data in the record file table 114, the control unit 109 further updates the button mapping table 115 (Step S14). Specifically, the control unit 109 assigns a minimum number of the numeric buttons 204 to the latest record file updated, and sequentially assigns the numbers of the numeric buttons 204 in ascending order to the already-stored record files in reverse chronological order of the recording times.

In the manner as described above, the recording of a broadcast program, and the updating of the record file table 114 and the button mapping table 115 in relation to the recording of the broadcast program, are completed.

Next,a reproduction operation of the recording/reproducing device will be described.

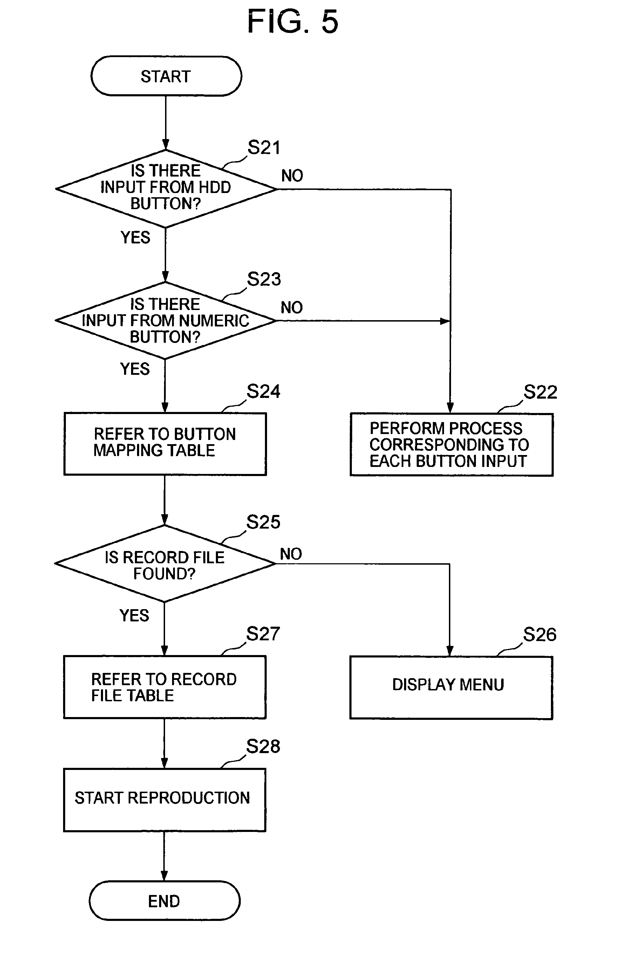

FIG. 5 is a flowchart describing a reproduction operation performed by the data recording/reproducing device according to this embodiment.

The control unit 109 monitors whether the "HDD" button 202 of the remote controller 113 has been pressed or not (Step S21) . When detecting that a user has pressed a button other than the "HDD" button 202 (Step S21; NO), the control unit 109 performs control to execute a process corresponding to the pressed button (Step S22).

When detecting the pressure of the "HDD" button 202 of the remote controller 113 (Step S21; YES), the control unit 109 then monitors whether any one of the numeric buttons 204 has been pressed (Step S23) . When detecting that a user has pressed a button other than the numeric buttons 204 of the remote controller 113 (Step S23; NO), the control unit 109 performs control to execute a process corresponding to the pressed button (Step S22).

When detecting pressure of any one of the numeric buttons 204 of the remote controller 113 (Step S23; YES), the control unit 109 searches for a recorded file corresponding to the numeric button 204 that was pressed, with reference to the button mapping table 115 (Step S24).

In a case where the button mapping table 115 does not include a record file corresponding to the numeric button 204 detected as being pressed (Step S25; NO), the control unit 109 displays a menu screen for displaying a list of the record files stored in the record file table 114 (Step S26). When the number of the record files in the list exceeds the number of the numeric buttons 204, a user can select a desired file from the displayed list. On the other hand, when the number of the record files in the list is small and the list does not include a record file corresponding to the pressed numeric button 204, the user can select a desired file from the list.

In a case where the button mapping table 114 includes a record file corresponding to the pressed one of the numeric buttons 204 detected (Step S25; YES), the control unit 109 obtains, with reference to the record file table 114, information stored in the record file table 114 necessary to reproduce the corresponding record file (Step S27). Then, the control unit 109 causes the recording/reproducing unit 103 to start reproducing the corresponding record file, based on information such as the obtained address information (Step S28).

Once the reproduction has been started, it is possible to fast-rewind, fast-forward, pause, or stop the reproduction as in normal operation.

Further, the data recording/reproducing device of this embodiment is configured such that it is not necessary to press the "HDD" button 202 during the reproduction of a record file to search for a record file assigned the numeric button 204 detected as being pressed, and to reproduce the record file if the record file is found. In other words, once the reproduction has been started, the process starts from Step S23. Alternatively, the data recording/reproducing device may be configured such that, even if a recorded file is being reproduced, the reproduction of the reproduced recorded file is stopped in a case where any one the numeric buttons 204 is detected as being pressed following the pressure of the "HDD" button 202, and the corresponding record file is reproduced.

In a case where any one of the numeric buttons 204 is newly pressed during reproduction of a record file and no record file corresponding to the pressed numeric button 204 is found, the reproduction operation of the record file being reproduced may be continued.

In a case where the "HDD" button 202 is pressed during reproduction, the process may return to the status in Step S21.

As described above, in the data recording/reproducing device according to this embodiment, the numbers of the numeric buttons 204 of the remote controller 113 are assigned in ascending order to the record files in reverse chronological order in which the record files have been recorded. When any of the numeric buttons 204 is pressed after the "HDD" button 202 of the remote controller 113 is pressed, a record file assigned a number corresponding to the pressed one of the numeric buttons 204 is reproduced. Accordingly, a user only needs to perform simple operations of pressing the "HDD" button 202 and the numeric button 204 to allow a record file to be reproduced. Once the reproduction has been started, a user can allow record files to be sequentially reproduced by pressing only the numeric button 204. Therefore, it is possible to easily reproduce a desired record file with a substantially reduced number of operations.

According to the above-mentioned embodiment, the button mapping table 115 stores only record files of the same number as the number of buttons possessed by the numeric buttons 204 on the remote controller 113. However, the present invention is not limited thereto. For example, even if the number of record files exceeds the number of buttons, the button mapping table 115 may hold all the record files stored in the record file table 114 in chronological order of the recording times. In this case, the number of record files to which the numeric buttons 204 are to be assigned corresponds to the number of the numeric buttons 204. Also in this case, when a new record file is recorded in the recording/reproducing unit 103, the latest record file is assigned a minimum number and the numbers which have been assigned to the already-stored record files are each incremented by one. Further, when a record file is deleted, the numbers assigned to the remaining record files which have been recorded prior to the deleted record file are decremented by one, and the last number is assigned to the latest record file of the files which have not been assigned numbers.

In this case, the button mapping table 115 may not be separately provided, and the record file table 114 may hold button mapping information together with other information such as recording times and address information of the record files.

In the above-mentioned embodiment, a description has been given of an exemplary case where the record files are recorded in a hard disk internally provided to the data recording/reproducing device. However, a recording medium for recording the record files is not limited thereto. For example, the record files may also be recorded on a portable recording medium such as an external hard disk or a digital versatile disc (DVD). For example, a remote controller used for a data recording/reproducing device of HD+DVD type is generally provided not only with the "HDD" button but also with a "DVD" button for selecting DVD reproduction. The "DVD" button may be similarly manipulated in place of the "HDD" button 202, and the recording/reproducing unit 103 reads out a data file recorded in a DVD and reproduces the data file by following an instruction of the control unit 109.

The above-mentioned case is merely an example of the present invention, and it is easily appreciated by those skilled in the art that various modifications can be made to the above-mentioned exemplary embodiment without departing from the novel disclosure and advantages of the present invention. Accordingly, the scope of the present invention includes all of those modifications.

The present invention has a very wide range of industrial applicability as a data recording/reproducing device which allows a user to easily watch broadcast signals recorded on a recording medium.

## Claims

1. A data recording/reproducing device, comprising:
a recording/reproducing unit which records/reproduces data files on/from a recording medium;
a receiving unit which receives an instruction signal from a remote controller, which has a plurality of numeric buttons each assigned different numbers, the instruction signal indicating a number assigned to a numeric button, in response to the button being pressed;
a button mapping table which associates the numbers assigned to the numeric buttons of the remote controller with the data files recorded on the recording medium, and stores the numbers and the data files; and
a control unit which executes control over the recording/reproducing unit so that, when the receiving unit has received an instruction signal indicating a number assigned to any of the numeric buttons, the recording/reproducing unit reproduces a data file which is stored in the button mapping table in association with the number indicated by the received instruction signal.

2. A data recording/reproducing device according to claim 1, wherein:
the control unit executes the control when the receiving unit has received an instruction signal indicating a number assigned to the any-of-the plurality of numeric buttons and, prior to receiving the instruction signal, has received from the remote controller, which has a selection button which is different from the numeric buttons, an instruction signal assigned to the selection button.

3. A data recording/reproducing device according to claim 1, wherein the control unit executes the control when the receiving unit has received an instruction signal indicating a number assigned to the any-of-the numeric buttons and the instruction signal continues to be received for a predetermined period.

4. A data recording/reproducing device according to claim 1, wherein the control unit executes the control when the receiving unit has received an instruction signal indicating a number assigned to the any-of-the numeric buttons and the instruction signal continues to be received a plurality of times.

5. A data recording/reproducing device according to any one of claims 1 to 4, further comprising a record file table which stores recording start times of the data files recorded on the recording medium, wherein
the recording/reproducing unit stores data files in the button mapping table, based on the recording start times of the data files stored in the record file table, so that the data files in reverse chronological order of the recording start times are associated with the numbers assigned to the numeric buttons in ascending order.

6. A data recording/reproducing device according claim 5, wherein the control unit updates the button mapping table each time the record file table is updated, using information stored in the updated record file table.

7. A data reproducing method, comprising:
using a data recording/reproducing device;
the data recording/reproducing device including:
a recording/reproducing unit which records/reproduces data files on/from a recording medium;
a receiving unit which receives an instruction signal from a remote controller, which has a plurality of numeric buttons each assigned different numbers, the instruction signal indicating a number assigned to a numeric button, in response to the button being pressed; and
a button mapping table which associates the numbers assigned to the numeric buttons of the remote controller with the data files recorded on the recording medium and stores the numbers and the data files; and
executing control over the recording/reproducing unit so that, when the receiving unit has received an instruction signal indicating a number assigned to any of the numeric buttons, the recording/reproducing unit reproduces a data file which is stored in the button mapping table in association with the number indicated by the received instruction signal.
